# EUROPEAN PATENT APPLICATION

(11) **EP 4 501 122 A1**
(43) Date of publication of application: **05.02.2025**
(21) Application number: 23780985.0
(22) Date of filing: 30.03.2023
(51) Int. Cl.: A23D 9/00, A23G 1/36, A23G 1/38

(54) **FAT FOR IMPROVING CHOCOLATE**

(30) Priority: 31.03.2022 JP 2022059030; 31.03.2022 JP 2022059108
(71) Applicant: Fuji Oil Holdings Inc., Izumisano-shi, Osaka 598-8540 (JP)
(72) Inventor: SAKAMOTO, Mai, Izumisano-shi, Osaka 598-8540 (JP); MORITA, Akira, Izumisano-shi, Osaka 598-8540 (JP); SATO, Yasuko, Izumisano-shi, Osaka 598-8540 (JP); TOBA, Yurina, Tsukubamirai-shi, Ibaraki 300-2436 (JP); NAKA, Tomomi, Izumisano-shi, Osaka 598-8540 (JP)
(74) Representative: Boult Wade Tennant LLP
(86) International application number: PCT/JP2023/013378
(87) International publication number: WO 2023/190977

(57) **Abstract**

An object is to provide a low-trans oil and/or fat for improving chocolate, which can improve functions such as a solidification rate and heat resistance of chocolate, and thus chocolate having good meltability in the mouth can be obtained. Disclosed is an oil and/or fat for improving chocolate, having a fatty acid composition suitably adjusted, in which an unsaturated fatty acid content is set to be from 0.5 mass% to 15 mass% in a constituent fatty acid composition, and an SFC at 35°C is 30% or more and an SFC at 45°C is 20% or less.

## Description

### Technical Field

### Related Application

This application claims the benefit of priority from Japanese Patent Application No. 2022-059030, filed on March 31, 2022, and Japanese Patent Application No. 2022-059108, filed on March 31, 2022. Each basic priority application is incorporated herein by reference in its entirety.

The present invention relates to an oil and/or fat for improving chocolate.

### Background Art

Hard butters widely used as cocoa butter substitutes are roughly classified into tempering type hard butters to be subjected to a temperature control operation at the time of solidification and molding, and non-tempering type hard butters not to be subjected to a temperature control operation. The tempering type hard butters contain a large amount of SUS type triglyceride (S: saturated fatty acid having from 16 to 18 carbon atoms, U: monounsaturated fatty acid having 18 carbon atoms) which is contained in large amount in cocoa butter, and thus, have characteristics and physical properties similar to those of cocoa butter. Thus, a tempering type hard butter has a high compatibility with cocoa butter, and provides a texture similar to that of cocoa butter; however, it is desirable to skip a tempering operation because it requires a precise temperature control.

A non-tempering type hard butter does not require the complicated tempering operation, and therefore, is capable of being suitably used not only for normal plate chocolate but also in various combined food in which chocolate is combined with bread or confectionery, and the non-tempering type hard butters can roughly be classified into trans fatty acid type hard butters, interesterified/fractionated type hard butters, and lauric acid type hard butters.

Among the non-tempering type hard butters, trans fatty acid type hard butters obtained by hydrogenating a liquid oil such as soybean oil or rapeseed oil have widely been used for having good meltability in the mouth and high compatibility with cocoa butter. However, the risk of trans fatty acid on health may be reported, and a low-trans fatty acid type hard butter containing no trans fatty acid is desired.

In the demands for low-trans fatty acid type hard butter as set forth above, an interesterified/fractionated type hard butter is being developed (Patent Documents 1 to 4). This interesterified/fractionated type hard butter has a good meltability in the mouth by being produced by chemically or enzymatically interesterifying a raw material oil and/or fat having an extremely low-trans fatty acid content, for example, fully hydrogenated oil of soybean oil or rapeseed oil, or a solid fat such as palm oil, and then performing a fractionation.

Lauric acid type hard butter has been manufactured for a long time from oil and/or fat rich in triglycerides containing a large amount of lauric acid as a raw material, and examples thereof may include fractionated hydrogenated oil of palm kernel oil.

Patent Documents 5 to 9 disclose oil and/or fat compositions for chocolate containing a lauric oil and/or fat having a low-trans fatty acid content.

### Citation List

### Patent Documents

Patent Document 1: JP 2005-507028 T
Patent Document 2: JP 2010-532802 T
Patent Document 3: JP 2007-319043 A
Patent Document 4: WO 2011/138918 A
Patent Document 5: JP 2008-182961 A
Patent Document 6: JP 2010-142152 A
Patent Document 7: JP 2010-142153 A
Patent Document 8: JP 2011-115075 A
Patent Document 9: JP 2016-116486 A

### Summary of Invention

### Technical Problem

In recent years, as a demand for non-tempering type hard butter to be used in chocolate, it is desirable to achieve both a demand in terms of physical properties such as workability and solidification rate and a demand in terms of good meltability in the mouth.

In chocolate using non-tempering type hard butter, quality design and heat resistance suitable for a temperature range in which a final product is distributed are desired.

The present inventors have considered the improvement of the function in low-trans chocolate.

Patent Documents 1 to 9 disclose an invention relating to a low-trans non-tempering type hard butter, and a function of increasing the solidification rate and improving the heat resistance is not sufficient.

In order to improve the solidification rate and heat resistance of chocolate and such functions, it is necessary to adjust hardness of chocolate, and it is conceivable to combine non-tempering type hard butter with oil and/or fat having a relatively high melting point or oil and/or fat which is liquid at room temperature to achieve both the functions.

However, in a chocolate-like food combined with breads distributed at normal temperature, when a chocolate-like food having heat resistance in storage at 30°C assumed in the summer season is designed, in a low-trans and high-melting point oil and/or fat, it is necessary to increase a content of saturated fatty acid in a fatty acid composition constituting the low-trans and high-melting point oil and/or fat, and the meltability in the mouth may be deteriorated; therefore, it is difficult to achieve both the improvement of the function and the good meltability in the mouth.

When the non-tempering type hard butter is combined with oil and/or fat that is liquid at normal temperature in the case of designing a chocolate that is assumed to be distributed in a chilling zone to around 20°C, although good meltability in the mouth is obtained, defects in appearance such as stickiness and oil oozing may occur, and it is difficult to achieve both physical properties and good meltability in the mouth and appearance.

In recognition of such known techniques, an object of the present invention is to provide a low-trans oil and/or fat for improving chocolate, which can improve the function such as the solidification rate and heat resistance of chocolate and can obtain chocolate having good meltability in the mouth.

As a preferred aspect, it is an object to provide a chocolate-like food whose softening point is adjusted by combining a low-trans oil and/or fat for improving chocolate and which has a solidification rate suitable for various temperature ranges, good meltability in the mouth, and good appearance.

### Solution to Problem

The present inventors have extensively conducted studies for achieving the above-mentioned object, and resultantly found that an oil and/or fat for improving chocolate in which an unsaturated fatty acid content is from 0.5 mass% to 15 mass% in a constituent fatty acid composition, the fatty acid composition is suitably adjusted, an SFC at 35°C is 30% or more, and an SFC at 45°C is 20% or less can solve the above-mentioned object, leading to completion of the present invention.

That is, the present invention includes the following contents.

### Advantageous Effects of Invention

According to the present invention, it is possible to provide a low-trans oil and/or fat for improving chocolate, which can improve the solidification rate and heat resistance of a chocolate-like food, and thus a chocolate-like food having good meltability in the mouth can be obtained.

As a preferred aspect, by blending a suitable amount of the oil and/or fat for improving chocolate of the present invention in a chocolate-like food blended with non-tempering type hard butter that has been used in the known art, it is possible to improve the solidification rate and heat resistance of the chocolate-like food and to provide a chocolate-like food having good meltability in the mouth.

As another preferred aspect, there can be provided a chocolate-like food having a solidification rate suitable for various temperature ranges, good meltability in the mouth, and good appearance.

As still another preferred aspect, when the chocolate-like food according to the present invention is used for coating applications, it is possible to obtain a coating chocolate in which the solidification rate and heat resistance required for coating chocolate are improved and which has good meltability in the mouth and good appearance.

### Description of Embodiments

Hereinbelow, the present invention will be described in detail.

Examples of oils and/or fats that can be used for the oil and/or fat for improving chocolate of the present invention include vegetable oils and/or fats such as soybean oil, high-erucic rapeseed oil, rapeseed oil, corn oil, cottonseed oil, peanut oil, sunflower oil, rice oil, safflower oil, olive oil, sesame oil, palm oil, coconut oil, palm kernel oil, medium-chain fatty acid-conjugated oil and/or fat (MCT), shea fat, sal fat, and cocoa fat; animal oils and/or fats such as milk fat, beef tallow, and lard; and hydrogenated oil, fractionated oil, hydrogenated fractionated oil, fractionated hydrogenated oil, and processed oils and/or fats subjected to an interesterification thereof, and mixed oils and/or fats thereof.

In a preferred aspect, the present invention is directed to low trans, so that a chocolate-like food can be produced without using a partially hydrogenated oil containing a relatively large amount of trans fatty acid.

When a high-erucic rapeseed oil is used, the content of the contained erucic acid is preferably 30 mass% or more in a constituent fatty acid composition.

The oil and/or fat for improving chocolate of the present invention satisfy all of the following (A) to (D) and satisfy the numerical ranges thereof, making it possible to obtain an oil and/or fat for improving chocolate having oil and/or fat properties suitable for low-trans oil and/or fat for improving chocolate:
(A) a content of unsaturated fatty acid in a constituent fatty acid composition is from 0.5 mass% to 15 mass%;
(B) a content mass ratio of palmitic acid to stearic acid in the constituent fatty acid composition is 2 or less;
(C) a content mass ratio of lauric acid to stearic acid in the constituent fatty acid composition is 1.9 or less; and
(D) a content of stearic acid in the constituent fatty acid composition is from 20 mass% to 45 mass%.

The content of the unsaturated fatty acid in the constituent fatty acid composition in (A) is preferably from 0.5 mass% to 13 mass%, more preferably from 0.5 mass% to 12 mass%, and still more preferably from 0.5 mass% to 10 mass%.

The upper limit value of the content mass ratio of palmitic acid to stearic acid in the constituent fatty acid composition in (B) is preferably 1.9 or less, more preferably 1.8 or less, and still more preferably 1.5 or less.

The lower limit value of the content mass ratio of palmitic acid to stearic acid in the constituent fatty acid composition in (B) is preferably 0.15 or more, and more preferably 0.2 or more.

The upper limit value of the content mass ratio of lauric acid to stearic acid in the constituent fatty acid composition in (C) is preferably 1.7 or less, more preferably 1.5 or less, and still more preferably 1 or less.

The lower limit value of the content mass ratio of lauric acid to stearic acid in the constituent fatty acid composition in (C) is preferably 0.1 or more, more preferably 0.2 or more, and still more preferably 0.4 or more.

The content of stearic acid in the constituent fatty acid composition in (D) is preferably from 20 mass% to 43 mass%, more preferably from 20 mass% to 40 mass%, and still more preferably from 22 mass% to 40 mass%.

In the oil and/or fat for improving chocolate of the present invention, a trans fatty acid content in the constituent fatty acid composition is preferably 5 mass% or less, more preferably 3 mass% or less, still more preferably 2 mass% or less, and most preferably 1 mass% or less.

The oil and/or fat for improving chocolate of the present invention is preferably interesterified oil and/or fat. Methods for interesterification are classified into: a method in which only fatty acids bonded to 1- and 3-positions of a triglyceride are specifically exchanged using an enzyme (lipase) (1,3-position-specific interesterification method); and a method in which fatty acids are nonspecifically exchanged using an enzyme or a metal catalyst (for example, sodium methylate) regardless of the bonding positions (random interesterification). The interesterification in the present invention is preferably the random interesterification as the latter interesterification. This is preferable because, it is possible to obtain more types of triglyceride, allowing an untempered chocolate to have an excellent stabilization of quality over a long term.

In the oil and/or fat for improving chocolate of the present invention, oils and/or fats to be used are not particularly limited as long as the above-described constitution is satisfied; however, the oil and/or fat for improving chocolate is preferably interesterified oil and/or fat using a raw material oil and/or fat containing the following oil and/or fat component A, oil and/or fat component B, and oil and/or fat component C as essential components. Other oils and/or fats may be blended within a range satisfying the configuration described above. The following description of the melting point means an slip melting point.
Oil and/or fat component A: non-laurin and non-palm high-melting point oil and/or fat (melting point: 50°C or higher and 70°C or lower)
Oil and/or fat component B: palm high-melting point oil and/or fat (melting point: 40°C or higher and 70°C or lower)
Oil and/or fat component C: laurin high-melting point oil and/or fat (melting point: 35°C or higher and 50°C or lower)

In the present specification, the non-laurin and non-palm high-melting point oil and/or fat is a high-melting point oil and/or fat that does not use a lauric oil and/or fat and a palm oil as raw materials, and a high-melting point oil and/or fat obtained by processing oils and/or fats that does not contain a lauric oil and/or fat and a palm oil as raw materials can be exemplified.

In the present specification, the palm high-melting point oil and/or fat is a high-melting point oil and/or fat of palm oil, and examples thereof include a high melting point portion obtained by fractionating palm oil and a high-melting point oil and/or fat obtained by processing such as hydrogenating.

In the present specification, the laurin high-melting point oil and/or fat is a high-melting point oil and/or fat of lauric oil and/or fat, and examples thereof include a high-melting point portion obtained by fractionating lauric oil and/or fat and a high-melting point oil and/or fat obtained by processing such as hydrogenating.

The laurin high-melting point oil and/or fat may be any high-melting point oil and/or fat obtained by processing a raw material oil and/or fat containing 90 mass% or more of lauric oil and/or fat, and a non-laurin oil and/or fat may be contained. As a processing method, it is preferable to perform full hydrogenation with an iodine value of 4 or less as a target.

The oil and/or fat for improving chocolate of the present invention has an SFC at 35°C of 30% or more and an SFC at 45°C of 20% or less. By setting SFC % as described above, it is possible to provide a chocolate-like food having a solidification rate suitable for various temperature ranges, good meltability in the mouth.

As a preferred aspect, it is possible to provide a chocolate-like food having heat resistance and good meltability in the mouth in storage at 30°C assumed in the summer season. As another preferred aspect, it is possible to provide a chocolate-like food which has good meltability in the mouth in a chilling zone to around 20°C and in which defects in appearance such as stickiness and oil oozing are suppressed.

The SFC at 35°C is more preferably 30% or more and 55% or less, still more preferably 30% or more and 50% or less, and still more preferably 35% or more and 50% or less.

The SFC at 45°C is more preferably 2.5% or more and 20% or less, still more preferably 3% or more and 20% or less, and even more preferably 3.5% or more and 17% or less.

The oil and/or fat for improving chocolate of the present invention preferably satisfies all of SFC % described below. Using the oil and/or fat for improving chocolate for chocolate-like food is preferable because such a feature that the meltability in the mouth is sharp, and there is no persistence, is obtained.
SFC at 20°C is from 75% to 95%
SFC at 25°C is from 60% to 90%
SFC at 30°C is from 55% to 75%

The SFC at 20°C is preferably from 80% to 95%.

The SFC at 25°C is preferably from 65% to 85%, and more preferably from 70% to 85%.

In the present specification, the chocolate-like food is not limited to chocolate, quasi chocolate and chocolate-utilizing food defined by the Japan Fair Trade Council of Chocolate Industry and the Japan Fair Trade Council of Chocolate-Utilizing Foods, but also entails oil and/or fat-processed food containing oils and/or fats as an essential component and using powdered milk, cheese powder, fruit juice powder, or the like not containing cocoa mass and the like.

In the present specification, the oil and/or fat content includes a fat content (cocoa butter) derived from a cocoa raw material such as cocoa mass or cocoa and an oil and/or fat content derived from a raw material such as milk fat derived from a dairy product such as whole milk powder. The oil and/or fat content of the chocolate-like food is preferably from 30 mass% to 70 mass%, and more preferably from 30 mass% to 60 mass%. If the oil and/or fat content is small, viscosity of the chocolate-like food is too high, and when the chocolate-like food is used for coating, coating work may be difficult. In addition, if the oil and/or fat content is too large, a chocolate flavor may become weak and oily, which is not preferable.

As a preferred embodiment, the chocolate-like food according to the present invention contains from 2 mass% to 35 mass% of the oil and/or fat for improving chocolate of the present invention in the oil and/or fat content in the chocolate-like food. The content is preferably from 2 mass% to 30 mass%, more preferably from 3 mass% to 30 mass%, and still more preferably from 3 mass% to 25 mass%. When the content is less than 2 mass%, characteristics such as improvement in heat resistance and improvement in solidification rate may not be obtained. If the content is more than 35 mass%, although the above-mentioned properties can be obtained, the meltability in the mouth is deteriorated, so that a good flavor may not be obtained, which is not preferable.

As another preferred aspect, the chocolate-like food of the present invention contains, in addition to the oil and/or fat for improving chocolate, from 30 mass% to 95 mass% of an oil and/or fat component X that satisfies all of the requirements (a) and (b) set forth below. The oil and/or fat component X content is preferably from 40 mass% to 95 mass%, and more preferably from 50 mass% to 95 mass%. When the oil and/or fat component X content is less than 30 mass%, characteristics required for chocolate-like foods such as sharp meltability in the mouth, bloom resistance, solidification rate, gloss after solidification, and resistance to peeling off from a covering material during eating may not be obtained.
(a) Having a trans fatty acid content of 5 mass% or less in a constituent fatty acid composition; and
(b) Containing non-tempering type hard butter and/or a lauric oil and/or fat.

Since the chocolate-like food according to the present invention is intended to have a low-trans fatty acid content, the oil and/or fat component X is required to have a trans fatty acid content of 5 mass% or less in the constituent fatty acid composition of the requirement (a). The trans fatty acid content is preferably 3 mass% or less, and more preferably 2 mass% or less.

In the oil and/or fat component X, in addition to the requirement (a), the requirement (b) in which the non-tempering type hard butter and/or lauric oil and/or fat are contained is also required.

The non-tempering type hard butter is an oil and/or fat that can be used in place of cocoa butter, and examples thereof include interesterified oil, post-interesterification fractionated hard butter, and lauric acid type hard butter.

Examples of the lauric oil and/or fat include coconut oil, palm kernel oil, and hydrogenated oils thereof.

It is also possible to use a mixture of the non-tempering type hard butter and/or the lauric oil and/or fat.

Two or more kinds of non-tempering type hard butter may be combined, or two or more kinds of lauric oils and/or fats may be combined.

In the chocolate-like food according to the present invention, a chocolate-like food suitable for various uses can be produced by appropriately adjusting a blending amount by combining oils and/or fats derived from cocoa mass, cocoa, whole milk powder, and the like with other oils and/or fats in addition to the oil and/or fat for improving chocolate and the oil and/or fat component X.

The method for producing the chocolate-like food according to the present invention can be carried out in the same manner as in producing a general chocolate-like food. Specifically, it is possible to obtain chocolate by essentially including the oil and/or fat for improving chocolate of the present invention, appropriately selecting raw materials such as: oils and/or fats such as non-tempering type hard butter, various powder foods such as sugar, cocoa mass, cocoa butter, cocoa powder, and milk powder; emulsifier; flavoring; and colorant, that are mixed with each other, and then subjected to a roll-refining and a conching process.

In the chocolate-like food according to the present invention, it is possible to use an emulsifier which is usually used in a manufacture of chocolates. Specific examples thereof may include lecithin, polyglycerin fatty acid ester, sucrose fatty acid ester, organic acid monoglycerin fatty acid ester, polysorbate, and polyglycerin condensed ricinoleic acid ester. These may be used alone, or may be used in combination of two or more thereof.

In the present specification, a softening point of chocolate-like food is a value obtained by measuring the chocolate-like food according to the method of measuring "softening point (ring-and-ball method)" described in The Standard Methods for the Analysis of Fats, Oils and Related Materials (1), 1996 Edition (compiled by Japan Oil Chemists' Society).

Although it is necessary to achieve both the evaluation of the texture of the chocolate-like food and the evaluation of the meltability in the mouth, usually, a product in which the softening point of the chocolate-like food is higher has better heat resistance, and when the heat resistance is regarded as important, the chocolate-like food can be designed using the softening point as an index.

As one of preferred applications of the chocolate-like food according to the present invention, the use in a coating application for coating or covering a surface of confectionery, bakery products, or the like can be exemplified.

In the chocolate-like food for coating, which contains the chocolate-like food according to the present invention, a method in which a coating operation is performed without tempering the melted chocolate-like food for coating can be exemplified.

The composite food obtained by coating using the chocolate-like food according to the present invention is not particularly limited as long as it is a confection or a bakery product, examples of the confection include Manju (steamed bread), Mushi-yokan (steamed adzuki-bean jelly), Castilla (sponge cake), Dorayaki (two small pancakes with sweet bean paste in between), Imagawa-yaki (Japanese muffin containing sweet bean paste, served hot), Taiyaki (fish-shaped pancake filled with sweet bean paste), Kintsuba (confection of sweetened beans wrapped in wheat-flour dough), waffle, Kurimanju (chestnut bread), Geppei (mooncake), Bolo (small round cookie), Yatsuhashi (cinnamon-seasoned cracknel), rice cracker, Karintou (fried dough cookie), doughnut, sponge cake, roll cake, angel cake, pound cake, Baumkuchen, fruit cake, madeleine, cream puff, eclair, mille-feuille, apple pie, tart, biscuit, cookie, cracker, steamed bread, pretzel, wafer, snack, pizza pie, crepe, soufflé, beignets, and a confection in which a fruit such as banana, apple, or strawberry is coated with coating chocolates, and examples of the bread include bread, Koppepan (Japanese bread roll), fruit bread, corn bread, butter roll, hamburger bread, French bread, roll bread, sweet bread, sweet dough, hardtack, muffin, bagel, croissant, Danish pastry, and naan.

### Examples

Hereinbelow, the present invention will be described more in detail, by presenting Examples. Incidentally, in the examples, both % and parts are meant to be on mass basis.

### (Analysis method)

### (Fatty acid composition)

The fatty acid composition was measured in accordance with the method specified in Japanese Oil Chemists' Society Standard Oil Analysis Test Method (1996 edition) 2.4.1.2 Methyl Esterification Method (boron trifluoride-methanol method).

### (SFC measurement method)

In the measurement of (SFC at each temperature) (solidification rate), SFC is measured in accordance with IUPAC. 2 150 SOLID CONTENT DETERMINATION IN FATS BY NMR. The analyzer used is "minispec mq20" available from Bruker Corporation.

### (SFC Parallel measurements at each temperature)

In order to evaluate dissolution characteristics, the oil and/or fat is held at 80°C for 30 minutes, then held at 60°C for 30 minutes to completely dissolve the oil and/or fat, and held at 0°C for 1 hour to solidify the oil and/or fat. In addition, after holding at a predetermined temperature (10°C, 20°C, 25°C, 30°C, 35°C, 40°C, 45°C, 50°C) for 30 minutes, the SFC (solid fat content) was measured.

### (Solidification rate)

The oil and/or fat was held at 80°C for 30 minutes, then held at 60°C for 30 minutes to completely dissolve the oil and/or fat, and held at 20°C to measure the SFC (solid fat content) after 3 minutes to 30 minutes.

### (Softening point of chocolate-like food)

The softening point was measured according to the method of measuring "softening point (ring-and-ball method)" described in The Standard Methods for the Analysis of Fats, Oils and Related Materials (1), 1996 Edition (compiled by Japan Oil Chemists' Society).

The raw material oil and/or fat was blended according to the description in Table 1. After stirring and mixing, 0.15 mass% of sodium methylate was added as a catalyst, random interesterification was performed at 80°C for 30 minutes, and then water washing/decoloring/deodorization was performed according to a known method to obtain an oil and/or fat for improving chocolate. The results of analyzing the fatty acid composition according to the fatty acid composition analysis method are presented in Table 1. In Table 1, the iodine value was expressed as IV.

In Comparative Example 1, the raw material oil and/or fat was blended according to the description in Table 1. After stirring and mixing, 0.15 mass% of sodium methylate was added as a catalyst, random interesterification was performed at 80°C for 30 minutes, and then water washing was performed according to a known method. Thereafter, 0.1 mass% of a nickel catalyst (SO-750 available from SAKAI CHEMICAL INDUSTRY CO., LTD.) was added, hydrogenating was performed up to an iodine value of 1 at a hydrogenation pressure of 0.26 MPa and an upper limit of a temperature of 180°C, and decolorization/deodorization was performed according to a known method.

**[Table 1]**

| Product name | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|
| | Rapeseed oil | | | | | | | 52.0 | | | | |
| | Palm kernel oil | | | | | | | 38.0 | | | | |
| | Palm kernel fully hydrogenated oil (IV<1): oil and/or fat component C | | | | | | 45.6 | | | | | |
| | Palm kernel fractionated low-melting-point fully hydrogenated oil (IV< 1): oil and/or fat component C | 50.0 | 50.0 | 50.0 | 55.0 | 60.0 | | | | | | |
| | Fully hydrogenated coconut oil (IV<1) | | | | | | | | 70.0 | | | |
| Raw material oil and/or fat | Palm stearin (IV30): oil and/or fat component B | 24.0 | 19.0 | 28.0 | 12.0 | | 10.0 | | | 61.0 | | 100 |
| | Palm stearin (IV12): oil and/or fat component B | | 5.0 | 2.0 | | | | | 30.0 | | | |
| | Palm oil | | | | | | 2.4 | | | 36.0 | 100 | |
| | Palm fully hydrogenated oil (rV< t): oil and/or fat component B | 16.0 | | | 18.0 | 24.0 | 21.0 | | | | | |
| | High oleic sunflower oil (IV84) | 2.1 | 3.4 | | 1.0 | 1.3 | 2.3 | | | 0.6 | | |
| | High oleic sunflower fully hydrogenated oil (IV< 1): oil and/or fat component A | 7.9 | 126 | | 4.0 | 4.7 | 8.7 | | | 2.4 | | |
| | Fully hydrogenated high-erucic rapeseed oil (IV< 1): oil and/or fat component A | | 10.0 | 20.0 | 10.0 | 10.0 | 10.0 | 10.0 | | | | |
| Step | Interesterification reaction | Present | Present | Present | Present | Present | Present | Present | Present | Present | Absent | Absent |
| | Full hydrogenation reaction | Absent | Absent | Absent | Absent | Absent | Absent | Present | Absent | Absent | Present | Absent |
| | C6:0 | 0.2 | 0.1 | 0.1 | 0.1 | 0.2 | | | | | | |
| | C8:0 | 1.9 | 1.8 | 1.8 | 2.1 | 2.6 | 1.1 | 1.2 | 5.0 | | | |
| | C10:0 | 1.6 | 1.7 | 1.6 | 1.9 | 2.1 | 1.2 | 1.3 | 3.9 | | | |
| | C12:0 | 20.2 | 20.2 | 20.3 | 23.6 | 25.7 | 20.3 | 19.1 | 31.7 | 0.3 | 0.3 | 0.1 |
| | C14:0 | 6.9 | 6.6 | 6.7 | 7.7 | 7.9 | 7.4 | 6.6 | 12.8 | 1.1 | 1.0 | 1.1 |
| | C16:0 | 27.4 | 22.0 | 25.3 | 21.6 | 16.8 | 21.9 | 6.9 | 32.4 | 53.2 | 43.3 | 64.2 |
| Fatty acid composition *%* | C16:1 | | | | | | 0.1 | | 0.0 | 0.2 | 0.1 | 0.1 |
| | C18:0 | 32.3 | 32.1 | 23.5 | 34.2 | 38.5 | 37.7 | 58.7 | 9.4 | 5.9 | 54.7 | 5.1 |
| | C18:1t | | | | | | | | | 0.1 | | |
| | C18:1c | 7.7 | 8.0 | 7.3 | 3.5 | 0.9 | 3.6 | | 3.5 | 30.0 | 0.1 | 24.2 |
| | Ct8 2t | | | | | | | | | 0.3 | | |
| | C18:2c | 1.4 | 1.3 | 1.6 | 0.7 | | 0.6 | | 0.7 | 6.7 | | 4.9 |
| | C20:0 | 0.4 | 1.2 | 2.0 | 1.1 | 1.1 | 1.2 | 1.8 | 0.2 | 0.7 | 0.5 | 0.3 |
| | C22:0 | | 5.1 | 9.7 | 3.5 | 4.1 | 5.0 | 4.4 | | 1.4 | | |
| (A) Unsaturated fatty acid content [mass%] | | 9.t | 9.2 | 8.9 | 4.2 | 0.9 | 4.3 | 0.0 | 4.2 | 37.4 | 0.2 | 29.1 |
| (B) Palmitic acid content/stearic acid content ratio | | 0.8 | 0.7 | 1.1 | 0.6 | 0.4 | 0.6 | 0.1 | 3.4 | 9.0 | 0.8 | 126 |
| (C) Lauric acid content/stearic acid content ratio | | 0.6 | 0.6 | 0.9 | 0.7 | 0.7 | 0.5 | 0.3 | 3.4 | 0.0 | 0.0 | 0.0 |
| (D) Stearic acid content | | 323 | 32. t | 23.5 | 34.2 | 38.5 | 37.7 | 58.7 | 9.4 | 5.9 | 54.7 | 5.1 |
| Trans fatty acid content [mass%] | | 0.0 | 0.0 | 0.0 | 0.0 | 0.0 | 0.0 | 0.0 | 0.0 | 0.4 | 0.0 | 0.0 |
| IV | | 9.3 | 9.3 | 9.2 | 4.9 | 1.4 | 4.1 | 0.7 | 4.2 | 38.7 | 0.7 | 29.4 |

### (Evaluation of fatty acid composition analysis value)

The composition analysis values were evaluated according to the following numerical values (A) to (D).
(A) The content of unsaturated fatty acid in the constituent fatty acid composition is from 0.5 mass% to 15 mass%.
(B) The content mass ratio of palmitic acid to stearic acid in the constituent fatty acid composition is 2 or less.
(C) The content mass ratio of lauric acid to stearic acid in the constituent fatty acid composition is 1.9 or less.
(D) The content of stearic acid in the constituent fatty acid composition is from 20 mass% to 45 mass%.

### (Discussion on Table 1)

The interesterified oils of Examples 1 to 6 satisfy all of the numerical ranges of (A) to (D) described above.

### (Raw material oil and/or fat)

Examples 1 to 6 were interesterified oils and/or fats containing the following oil and/or fat component A, oil and/or fat component B, and oil and/or fat component C in the raw material oil and/or fat.
Oil and/or fat component A: non-laurin and non-palm high-melting point oil and/or fat (melting point: 50°C or higher and 70°C or lower)
Oil and/or fat component B: palm high-melting point oil and/or fat (melting point: 40°C or higher and 70°C or lower)
Oil and/or fat component C: laurin high-melting point oil and/or fat (melting point: 35°C or higher and 50°C or lower)

The SFC at each temperature was measured according to the method of measuring (SFC at each temperature) described above, and the results are presented in Table 2.

**[Table 2]**

| | 10°C | 20°C | 25°C | 30°C | 35°C | 40°C | 45°C | 50°C |
|---|---|---|---|---|---|---|---|---|
| Example 1 | 94.6 | 83.9 | 73.0 | 57.7 | 39.0 | 20.7 | 6.2 | 0.1 |
| Example 2 | 95.1 | 85.0 | 73.8 | 58.0 | 39.3 | 20.5 | 5.5 | 0.0 |
| Example 3 | 94.7 | 84.2 | 73.5 | 58.3 | 39.7 | 20.9 | 4.7 | 0.1 |
| Example 4 | 96.3 | 90.9 | 82.9 | 67.8 | 48.2 | 25.8 | 9.0 | 0.0 |
| Example 5 | 95.7 | 87.9 | 78.7 | 63.4 | 44.4 | 23.8 | 7.3 | 0.0 |
| Example 6 | 96.2 | 91.7 | 84.7 | 70.4 | 52.3 | 31.0 | 15.3 | 0.2 |
| Comparative Example 1 | 97.2 | 95.1 | 91.2 | 83.5 | 70.0 | 54.6 | 36.1 | 18.1 |
| Comparative Example 2 | 90.6 | 73.2 | 56.4 | 34.3 | 11.4 | 0.3 | 0.0 | 0.0 |
| Comparative Example 3 | 82.6 | 65.2 | 54.0 | 41.3 | 29.7 | 19.5 | 9.6 | 0.2 |
| Comparative Example 4 | 98.7 | 98.5 | 98.4 | 98.3 | 98.2 | 98.0 | 96.7 | 94.9 |
| Comparative Example 5 | 85.0 | 73.6 | 65.7 | 56.0 | 46.7 | 38.5 | 30.6 | 20.5 |

### (Evaluation of SFC % -1)

It was defined as an essential condition for the oil and/or fat for improving chocolate of the present invention that all of the following numerical ranges were satisfied.
- SFC at 35°C is 30% or more
- SFC at 45°C is 20% or less

### (Evaluation of SFC % -2)

It was defined as an index for the good oil and/or fat for improving chocolate that all of the following numerical ranges were satisfied.
- SFC at 20°C is from 75% to 95%
- SFC at 25°C is from 60% to 90%
- SFC at 30°C is from 55% to 75%

### (Discussion on Table 2)

- Examples 1 to 6, which satisfied all the evaluations of the fatty acid composition analysis value, also satisfied (Evaluation of SFC % -1) as the requirement for the oil and/or fat for improving chocolate of the present invention.
- In Examples 1 to 6, sharp melting characteristics satisfying (Evaluation of SFC % -2) were obtained.

The oil and/or fat for improving chocolate of each of the following Examples 1 to 6 performed were blended into the oil and/or fat content in a chocolate-like food 1 for coating, and the results obtained by measuring the solidification rate according to the (Solidification rate) measurement method were presented in Table 3. The solid fat content of 6.5% or more after 10 minutes was defined as a target value of a good solidification rate required for chocolate-like food.

Specifically, each vegetable oil and/or fat was blended according to a blending ratio in (Formulation of vegetable oil and/or fat portion), and milk fat and cocoa butter were also blended at the corresponding blending ratio according to a chocolate blending of Table 4 to measure the solidification rate. The milk fat in a whole milk powder was calculated as 26%.

**[Table 3]**

| Unit: % | | | | | | | | |
|---|---|---|---|---|---|---|---|---|
| Blended oil and/or fat for improving chocolate | 1 min | 3 min | 5 min | 7 min | 10 min | 20 min | 30 min | 40 min |
| Example 1 | 0.0 | 0.6 | 5.4 | 7.0 | 8.1 | 31.3 | 35.6 | 36.5 |
| Example 2 | 0.3 | 0.6 | 4.9 | 6.8 | 7.5 | 27.7 | 34.4 | 35.7 |
| Example 3 | 0.0 | 0.3 | 4.9 | 6.0 | 7.0 | 24.9 | 34.0 | 35.7 |
| Example 4 | 0.2 | 0.4 | 5.2 | 6.7 | 8.0 | 27.0 | 35.1 | 36.6 |
| Example 5 | 0.0 | 0.5 | 4.9 | 6.6 | 7.7 | 26.4 | 34.4 | 36.1 |
| Example 6 | 0.2 | 1.7 | 6.4 | 8.1 | 9.5 | 33.6 | 38.1 | 39.2 |

### (Discussion on Table 3)

By blending the oils and/or fats for improving chocolate of Examples 1 to 6 satisfying the constituent requirements, the solid fat content after 10 minutes was more than 6.5%, and good results were obtained.

### (Evaluation of oil and/or fat for improving chocolate in chocolate-like food 1 for coating (stored at 30°C))

A chocolate-like food to be combined with breads distributed at normal temperature was produced using the produced oil and/or fat for improving chocolate, and evaluated in storage at 30°C assumed in the summer season.

**[Table 4]**

| Raw material | Formulation (mass%) |
|---|---|
| Sugar | 37.8 |
| Palm olein (iodine value: 67) | 1.5 |
| Non-tempering type hard butter | 24.0 |
| Oil and/or fat for improving chocolate | 4.0 |
| Whole milk powder | 15.5 |
| Lactose | 9.5 |
| Cocoa butter | 7.1 |
| Emulsifier | 0.6 |
| Oil and/or fat content in chocolate | 40.6 |
| Ratio of non-tempering type hard butter in oil and/or fat content in chocolate | 59.1 |
| Ratio of oil and/or fat component X in oil and/or fat content in chocolate | 59.1 |
| Ratio of oil and/or fat for improving chocolate in oil and/or fat content in chocolate | 9.8 |

A chocolate-like food was produced according to the formulation in Table 4. Experimental production was performed with the same formulation in which only the vegetable oil and/or fat portion to be blended was different. The chocolate-like food produced according to (Evaluation method and criteria) was evaluated.

### (Formulation of vegetable oil and/or fat portion)

Each oil and/or fat for improving chocolate was used in 4 parts by mass, as the remaining 25.5 parts by mass, 1.5 parts by mass of palm olein (iodine value: 67), and as the non-tempering type hard butter, 9.5 parts by mass of Parkena H (available from Fuji Oil Co., Ltd., trans fatty acid content: 1 mass% or less) which was a hydrogenating type of palm kernel oil stearin and 14.5 parts by mass of non-tempering type hard butter (trans fatty acid content: 1 mass% or less) which was randomly interesterified oil and had the fatty acid composition presented in Table 5 were used.

**[Table 5]**

| Number of carbons | C8 | C10 | C12 | C14 | C16 | C18 | C18:1 | C18:2 | C18:3 | C20 | C22 |
|---|---|---|---|---|---|---|---|---|---|---|---|
| Content % | 2.5 | 2.4 | 22.7 | 9.6 | 32.1 | 7.6 | 14.6 | 2.8 | 0.0 | 1.0 | 4.7 |

### (Evaluation method and criteria)

After the chocolate-like food obtained was completely melted, the temperature was adjusted to 45°C, and the chocolate-like food was coated on a half size of Chojuku Roll (Pasco Shikishima Corporation) at room temperature. A basis weight at the time of coating was from 6 to 7 g as a guide.

### • Flavor criteria

4 points: Meltability in the mouth is very good, and no persistence is felt.
3 points: Meltability in the mouth is good, and no persistence is felt.
2 points: Meltability in the mouth is slightly poor, and the persistence is slightly felt.
1 point: Meltability in the mouth is poor, and the persistence is felt.
3 or more points were determined to be acceptable.

### • Solidification criteria

Coating was performed in the same manner as described above, and a solidification time of 6 minutes 30 seconds or less was regarded as acceptable and indicated by o.

### • Stickiness criteria

4 points: After coating and storage at 30°C for 1 day, no fingerprint is found even when the coating is touched.
3 points: After coating and storage at 30°C for 1 day, a slight fingerprint is found even when the coating is touched.
2 points: After coating and storage at 30°C for 1 day, a clear fingerprint is found when the coating is touched.
1 point: After coating and storage at 30°C for 1 day, chocolate sticks to a finger when the coating is touched.
3 or more points were determined to be acceptable.

### • Comprehensive evaluation

When all the evaluation results were acceptable, the comprehensive evaluation was indicated by o.

**[Table 6]**

| | Example 7 | Example 8 | Example 9 | Example 10 | Example 11 | Example 12 | Comparative Example 6 | Comparative Example 7 | Comparative Example 8 | Comparative Example 9 | Comparative Example 10 |
|---|---|---|---|---|---|---|---|---|---|---|---|
| Used oil and/or fat for improving chocolate | Example 1 | Example 2 | Example 3 | Example 4 | Example 5 | Example 6 | Comparative Example 1 | Comparative Example 2 | Comparative Example 3 | Comparative Example 4 | Comparative Example 5 |
| Softening point of chocolate | 35.2°C | 35.2°C | 35.2°C | 35.5°C | 35.5°C | 35.8°C | 38.0°C | 33.0°C | 35.2°C | 44.0°C | 36.3°C |
| Flavor | 4 | 4 | 3 | 4 | 3 | 4 | 2 | 3 | 2 | 1 | 1 |
| Solidification | ○ | ○ | ○ | ○ | ○ | ○ | ○ | × | × | ○ | ○ |
| Stickiness | 3 | 3 | 3 | 3 | 3 | 4 | 4 | 1 | 2 | 4 | 3 |
| Comprehensive evaluation | ○ | ○ | ○ | ○ | ○ | ○ | × | × | × | × | × |

### (Discussion on Table 6)

The chocolate-like food of Example had better results than the comparative example.

### (Evaluation of oil and/or fat for improving chocolate in chocolate-like food 2 for coating (stored at 30°C))

A chocolate-like food to be combined with breads distributed at normal temperature was produced using the oil and/or fat for improving chocolate produced in Example 6, and evaluated in storage at 30°C assumed in the summer season.

**[Table 7]**

| Formulation (mass%) | | | |
|---|---|---|---|
| Raw material | Example 13 | Example 14 | Comparative Example 11 |
| Sugar | 48.6 | 48.6 | 48.6 |
| Lauric oil and/or fat | 40.5 | 41.5 | 43.5 |
| Oil and/or fat for improving chocolate | 3.0 | 2.0 | 0.0 |
| Skimmed milk powder | 3.5 | 3.5 | 3.5 |
| Cocoa butter | 2.1 | 2.1 | 2.1 |
| Whole milk powder | 1.5 | 1.5 | 1.5 |
| Emulsifier | 0.7 | 0.7 | 0.7 |
| Flavoring | 0.1 | 0.1 | 0.1 |
| Oil and/or fat content in chocolate | 46.0 | 46.0 | 46.0 |
| Ratio of lauric oil and/or fat in oil and/or fat content in chocolate | 88.0 | 90.2 | 94.6 |
| Ratio of oil and/or fat for improving chocolate in oil and/or fat content in chocolate | 6.5 | 4.3 | 0.0 |

A chocolate-like food was produced according to the formulation in Table 7.

As lauric oil and/or fat, oil and/or fat obtained by mixing Neumeralin 38 (available from Fuji Oil Co., Ltd., trans fatty acid content: 1 mass% or less), which is a hydrogenated oil of palm kernel olein, and palm kernel oil (trans fatty acid content: 1 mass% or less) at a ratio of 57: 43 was used.

The chocolate-like food produced according to (Evaluation method and criteria) was evaluated.

### (Evaluation method and criteria)

After the chocolate-like food obtained was completely melted, the temperature was adjusted to 45°C, and the chocolate-like food was coated on a half size of Chojuku Roll (Pasco Shikishima Corporation) at room temperature. The basis weight at the time of coating was from 4 to 5 g as a guide.

### • Flavor criteria

4 points: Meltability in the mouth is very good, and no persistence is felt.
3 points: Meltability in the mouth is good, and no persistence is felt.
2 points: Meltability in the mouth is slightly poor, and the persistence is slightly felt.
1 point: Meltability in the mouth is poor, and the persistence is felt.
3 or more points were determined to be acceptable.

### • Solidification criteria

Coating was performed in the same manner as described above, and a solidification time of 6 minutes 30 seconds or less was regarded as acceptable and indicated by o.

### • Stickiness criteria

4 points: After coating and storage at 30°C for 1 day, no fingerprint is found even when the coating is touched.
3 points: After coating and storage at 30°C for 1 day, a slight fingerprint is found even when the coating is touched.
2 points: After coating and storage at 30°C for 1 day, a clear fingerprint is found when the coating is touched.
1 point: After coating and storage at 30°C for 1 day, chocolate sticks to a finger when the coating is touched.
3 or more points were determined to be acceptable.

### • Comprehensive evaluation

When all the evaluation results were acceptable, the comprehensive evaluation was indicated by o.

**[Table 8]**

| | Example 13 | Example 14 | Comparative Example 11 |
|---|---|---|---|
| Softening point of chocolate | 34.7°C | 34.4°C | 32.7°C |
| Flavor | 4 | 4 | 3 |
| Solidification | ○ | ○ | × |
| Stickiness | 4 | 4 | 2 |
| Comprehensive evaluation | ○ | ○ | × |

### (Discussion on Table 8)

The chocolate-like food of Example had good evaluation results.

In Comparative Example 11 in which the oil and/or fat for improving chocolate was not used, solidification was slow, stickiness occurred, and the result was unacceptable.

### (Evaluation of oil and/or fat for improving chocolate in chocolate-like food 3 for coating (stored at 20°C))

A chocolate-like food to be combined with confectionery distributed in the chilling zone to 20°C was produced using the oil and/or fat for improving chocolate produced in Example 6, and evaluated in storage at 20°C.

**[Table 9]**

| | | | Formulation (mass%) |
|---|---|---|---|
| Raw material | Example 15 | Example 16 | Comparative Example 12 |
| Sugar | 37.8 | 37.8 | 37.8 |
| Palm olein (iodine value: 67) | 2.3 | 0.0 | 0.0 |
| Non-tempering type hard butter | 7.6 | 8.3 | 9.6 |
| Lauric oil and/or fat | 15.6 | 17.2 | 19.9 |
| Oil and/or fat for improving chocolate | 4.0 | 4.0 | 0.0 |
| Whole milk powder | 15.5 | 15.5 | 15.5 |
| Lactose | 9.5 | 9.5 | 9.5 |
| Cocoa butter | 7.1 | 7.1 | 7.1 |
| Emulsifier | 0.6 | 0.6 | 0.6 |
| Oil and/or fat content in chocolate | 40.6 | 40.6 | 40.6 |
| Ratio of lauric oil and/or fat in oil and/or fat content in chocolate | 38.4 | 42.4 | 49.0 |
| Ratio of non-tempering type hard butter in oil and/or fat content in chocolate | 18.7 | 20.4 | 23.6 |
| Ratio of oil and/or fat component X in oil and/or fat content in chocolate | 57.1 | 62.8 | 72.6 |
| Ratio of oil and/or fat for improving chocolate in oil and/or fat content in chocolate | 9.9 | 9.9 | 0.0 |

A chocolate-like food was produced according to the formulation in Table 9.

For the non-tempering type hard butter, the randomly interesterified oil used in the evaluation of the chocolate-like food 1 for coating was used.

As the lauric oil and/or fat, coconut oil (trans fatty acid content: 1 mass% or less) was used.

The chocolate-like food produced according to (Evaluation method and criteria) was evaluated.

### (Evaluation method and criteria)

After the chocolate-like food obtained was completely melted, the temperature was adjusted to 40°C, and the chocolate-like food was coated on thick cut Baumkuchen (ACE BAKERY. Co., Ltd.) at room temperature. The basis weight at the time of coating was 3 g as a guide.

### • Flavor criteria

4 points: Meltability in the mouth is very good, and no persistence is felt.
3 points: Meltability in the mouth is good, and no persistence is felt.
2 points: Meltability in the mouth is slightly poor, and the persistence is slightly felt.
1 point: Meltability in the mouth is poor, and the persistence is felt.
3 or more points were determined to be acceptable.

### • Solidification criteria

Since the softening point was different from the evaluation target described above, a sample in which the solidification time at 15°C was 10 minutes or less was regarded as acceptable and indicated by ∘.

### • Stickiness criteria

4 points: After coating and storage at 20°C for 1 day, no fingerprint is found even when the coating is touched.
3 points: After coating and storage at 20°C for 1 day, a slight fingerprint is found even when the coating is touched.
2 points: After coating and storage at 20°C for 1 day, a clear fingerprint is found when the coating is touched.
1 point: After coating and storage at 20°C for 1 day, chocolate sticks to a finger when the coating is touched.
3 or more points were determined to be acceptable.

### • Evaluation method and evaluation criteria for oil oozing

Since a low-melting-point oil and/or fat which was liquid at normal temperature was contained, oil oozing and the like generated on the surface after storage at 20°C for 1 day were also evaluated.
4 points: After coating and storage at 20°C for 1 day, the appearance is very good. No oil oozing.
3 points: After coating and storage at 20°C for 1 day, the appearance is good. Although there is slight oil oozing, the degree is within an acceptable range.
2 points: After coating and storage at 20°C for 1 day, oil oozing on the surface is observed at multiple portions.
1 point: After coating and storage at 20°C for 1 day, the appearance is poor. Oil oozing is conspicuous.
3 or more points were determined to be acceptable.

### • Comprehensive evaluation

When all the evaluation results were acceptable, the comprehensive evaluation was indicated by o.

**[Table 10]**

| | Example 15 | Example 16 | Comparative Example 12 |
|---|---|---|---|
| Softening point of chocolate | 32.0°C | 32.4°C | 31.8°C |
| Flavor | 3 | 3 | 3 |
| Solidification | ○ | ○ | × |
| Stickiness | 4 | 4 | 3 |
| Oil oozing | 3 | 4 | 2 |
| Comprehensive evaluation | ○ | ○ | × |

### (Discussion on Table 10)

The chocolate-like food for coating of Example had good evaluation results.

In Comparative Example 12 in which the oil and/or fat for improving chocolate was not used, solidification was slow, oil oozing occurred, and the result was unacceptable.

### Industrial Applicability

By using the oil and/or fat for improving chocolate of the present invention, the solidification rate and heat resistance of chocolate can be improved, it is possible to obtain a chocolate having good meltability in the mouth, and in particular, the oil and/or fat for improving chocolate can be suitably used for chocolate not subjected to tempering operation.

## Claims

1. An oil and/or fat for improving chocolate, satisfying all of (A) to (D) set forth below and having an SFC at 35°C of 30% or more and an SFC at 45°C of 20% or less:
(A) a content of unsaturated fatty acid in a constituent fatty acid composition is from 0.5 mass% to 15 mass%;
(B) a content mass ratio of palmitic acid to stearic acid in the constituent fatty acid composition is 2 or less;
(C) a content mass ratio of lauric acid to stearic acid in the constituent fatty acid composition is 1.9 or less; and
(D) a content of stearic acid in the constituent fatty acid composition is from 20 mass% to 45 mass%.

2. The oil and/or fat for improving chocolate according to claim 1, which is an interesterified oil and/or fat.

3. The oil and/or fat for improving chocolate according to claim 1 or 2, satisfying all of SFC % set forth below:
SFC at 20°C is from 75% to 95%;
SFC at 25°C is from 60% to 90%; and
SFC at 30°C is from 55% to 75%.

4. A chocolate-like food comprising from 2 mass% to 35 mass% of the oil and/or fat for improving chocolate described in claim 1 or 2 in an oil and/or fat content of the chocolate-like food.

5. A chocolate-like food comprising from 2 mass% to 35 mass% of the oil and/or fat for improving chocolate described in claim 3 in an oil and/or fat content of the chocolate-like food.

6. The chocolate-like food according to claim 4, comprising, in an oil and/or fat content of the chocolate-like food, from 30 mass% to 95 mass% of an oil and/or fat component X that satisfies all of requirements (a) and (b) set forth below:
(a) having a trans fatty acid content of 5 mass% or less in the constituent fatty acid composition; and
(b) comprising non-tempering type hard butter and/or a lauric oil and/or fat.

7. The chocolate-like food according to claim 5, comprising, in an oil and/or fat content of the chocolate-like food, from 30 mass% to 95 mass% of an oil and/or fat component X that satisfies all of requirements (a) and (b) set forth below:
(a) having a trans fatty acid content of 5 mass% or less in a constituent fatty acid composition; and
(b) comprising non-tempering type hard butter and/or a lauric oil and/or fat.

8. The chocolate-like food according to claim 6, which is for coating.

9. The chocolate-like food according to claim 7, which is for coating.
